# EUROPÄISCHE PATENTANMELDUNG

(11) **EP 1 387 130 A1**
(43) Veröffentlichungstag der Anmeldung: **04.02.2004**
(21) Anmeldenummer: 02405668.1
(22) Anmeldetag: 31.07.2002
(51) Int. Cl.: F24J 3/08

(54) **Fixierelement für Rohrabschnitte einer Erdwärmesonde**

(71) Anmelder: Haka Gerodur AG, Fabrik für Kunststoff-Produkte, 8717 Benken (CH)
(72) Erfinder: Luder, Fritz, 8360 Eschlikon (CH)
(74) Vertreter: Patentanwälte Schaad, Balass, Menzl & Partner AG

(57) **Zusammenfassung**

Die vorliegende Erfindung betrifft ein Fixierelement (1) für Rohrabschnitte (23,24,25,26) eines Rohrpaares einer Erdwärmesonde, das über ein Verbindungsstück (38) mit einem bogenförmigen Rohrteil miteinander verbundene Rohre aufweist. Das Fixierelement (1) besitzt mindestens zwei Ausnehmungen (13,14,15,16), deren Radien den Aussenradien der Rohrabschnitte (23,24,25,26) entsprechen und die Ausnehmungen (13,14,15,16) sind dazu bestimmt, Rohrabschnitte (23,24,25,26) in axialer Richtung zu fügen, wobei das Fixierelement (1) eine Stossfläche(1) für eine Einführstange für die Erdwärmesonde aufweist.

## Beschreibung

Die Erfindung betrifft ein Fixierelement für Rohrpaar einer Erdwärmesonde, insbesondere für zwei Rohrpaare einer Erdwärmesonde. Überdies betrifft die Erfindung ein Fixierelement, durch dessen Aussparungen Rohrabschnitte in axialer Richtung gefügt sind.

Eine Erdwärmesonde wird zur Ausnutzung der Erdwärme als rohrförmige Wärmetauscher in den Boden eingesetzt. Eine Erdwärmesonde besteht im allgemeinen aus einem oder zwei Rohrpaaren. Ein flüssiger Wärmeträger wird von einem erstem Sondenkopf über ein Sonden-Zulaufrohr zu einem Sondenfuss geführt, dort umgelenkt, und über einen Sonden-Rücklaufrohr zu einem zweiten Sondenkopf geführt. Die beiden Sondenköpfe sind über ein Sammelzulaufrohr bzw. über ein Sammelrücklaufrohr an eine Wärmepumpe angeschlossen.

Infolge der Krümmung der Rohre lassen sich die Rohre nur mit Mühe in das enge Bohrloch einführen. In vielen Fällen kommt noch hinzu, dass das Bohrloch ganz oder teilweise mit Wasser oder einer anderen Flüssigkeit gefüllt ist, sodass infolge des niedrigen spezifischen Gewichts der leeren Rohre diese beim Eintauchen in die Flüssigkeit einen Auftrieb erhalten, der das Einführen stark erschwert.

In CH 653 120 A5 wird eine Vorrichtung beschrieben, die das Einführen einer Erdwärmesonde in das Bohrloch erleichtert. Dabei werden zwei Rohrpaare durch eine Bride zusammengehalten, die die Vor- und Rücklaufrohre der Rohrpaare umfasst. Der Abstand zwischen den Vor- und Rücklaufrohre wird durch eine stabförmige Verstrebung konstant gehalten, die im Zentrum der 4 Rohre angebracht ist. Die stabförmige Verstrebung ist ausserdem mit der Bride verbunden. Die Bride und die stabförmige Verstrebung sind aus Stahl oder Eisen und damit korrosionsanfällig. Nachteilig an dieser Vorrichtung ist, dass die Bride beim Einführen der Erdwärmesonde in das Bohrloch sehr leicht verrutschen, was zu einer Verdrehung und Beschädigung der Rohrpaare führen kann.

Die Aufgabe der vorliegenden Erfindung besteht darin, eine wirtschaftliche Vorrichtung zu schaffen, mit der ein oder mehrere Rohrpaare ohne Beschädigung in ein enges Bohrloch problemlos eingebracht werden können.

Die Aufgabe wird durch das Fixierelement mit den Merkmalen des Patentanspruch 1 gelöst. Weitere vorteilhafte Ausführungsformen sind in den abhängigen Ansprüchen beansprucht und in der Beschreibung dargestellt.

Das erfindungsgemässe Fixierelement für Rohrabschnitte einer Erdwärmesonde weist Ausnehmungen auf, die dazu bestimmt sind, Rohrabschnitte einer Erdwärmesonde in axialer Richtung zu fügen. Die Erdwärmesonde weist zwei miteinander über ein Verbindungsstück mit einem bogenförmigen Rohrteil verbundene Rohre auf. Die durch die Ausnehmungen zu fügenden Rohrabschnitte der Erdwärmesonde befinden sich vorzugsweise im unmittelbaren Anschluss an das Verbindungsstück mit dem bogenförmigen Rohrteil, d.h. am unteren Ende des Verlaufrohres und am Anfang des Rücklaufrohres. Die Rohrabschnitte weisen vorzugsweise eine Anschlagsstelle auf. Diese kann beispielsweise die Schweissnaht zwischen dem Rohrabschnitt und dem Verbindungsstück mit dem bogenförmigen Rohrteil sein.

Das erfindungsgemässe Fixierelement ist formstabil, da es einstückig ausgebildet ist und das Material nicht verformbar ist. Dadurch ist ein gleichbleibender Abstand der Rohrabschnitte gewährleistet und eine Auslenkung nach Aussen oder ein Wegdrehen der Rohre ist nicht mehr möglich. Durch die auf den Rohrabschnitten angeordneten Anschlagsstellen ist zusätzlich eine horizontale Ausrichtung des Fixierelements gewährleistet. Die Rohre werden durch die Anschlagsstellen an einem Tiefpunkt arretiert, sodass während des Einführens mit Druck durch eine Einführstange von oben, das erfindungsgemässe Fixierelement in axialer Richtung nicht verschoben wird.

Das erfindungsgemässe Fixierelement weist vorzugsweise zwei oder vier Ausnehmungen auf, die dazu bestimmt sind, Rohrabschnitte von einem oder zwei Rohrpaaren einer Erdwärmesonde oder zwei Rohrpaaren einer Erdwärmesonde in axialer Richtung zu fügen.

Die Ausnehmungen erstrecken sich über ein Bogensegment mit einem Winkel von 180 bis 270°. Dadurch werden die zu fügenden Rohrabschnitte optimal gehalten und das Anbringen der Rohrabschnitte kann sehr einfach erfolgen beispielsweise durch Einlegen, Einschieben, Einpressen oder Klemmen der Rohrabschnitte in das Fixierelement.

Das Fixierelement weist ausserdem eine Stossfläche für den Endabschnitt einer Einführstange auf, sodass das Fixierelement mit der von ihm gehaltenen Erdwärmesonde mittels Einführstange in das Bohrloch gestossen werden kann. Die Stossfläche ist vorzugsweise im Zentrum des Fixierelements angebracht. Solange die Lotstellung während des Einfügens nicht beeinträchtigt ist, ist es aber auch möglich, die Stossfläche gegen den Rand des Fixierelements zu verschieben. Die Stossfläche kann sich auf der Oberfläche des erfindungsgemässen Fixierelement befinden.

Alternativ ist die Stossfläche in einer Ausnehmung angeordnet, die zur Aufnahme des Endabschnitts der Einführstange bestimmt ist. Dadurch erhält die Einführstange seitlichen Halt, was das Einführen stark vereinfacht, da ein Wegrutschen verhindert wird. Damit ermöglicht das erfindungsgemässe Fixierelement ein erleichtertes Einbringen der Erdwärmesonde in das Bohrloch, wobei die Lotstellung der Erdwärmesonde während des Einschiebens sichergestellt ist und damit ein Schutz derselben vor Beschädigung gewährleistet wird.

Das erfindungsgemässe Fixierelement kann ausserdem Durchflusskanäle enthalten, die dafür bestimmt sind, dass nach dem Einführen Suspensionen und Lösungen, wie zum Beispiel eine Bentonit/Sand/Wasser Suspension das Fixierelement noch ohne weiteres passieren kann. Geeignete Suspensionen sind Stüwamix® und Stüwatherm® der Firma Stüwa oder Tixoton® der Südchemie. Ausserdem ist die jeweils zwischen zwei benachbarten Aussparungen liegende Seitenwand des erfindungsgemässen Fixierelement vorzugsweise nach innen versetzt, d.h. sie liegt dem Zentrum des Fixierelements näher als die am weitesten nach aussen stehende Mantellinie der in den Ausnehmen axial gefügten Rohrabschnitte. Damit kommt das Fixierelement beim Einführen in das Bohrloch einerseits nicht mit der Wand in Kontakt, was die Reibung minimiert und andererseits sind weitere Öffnungen vorhanden, durch die Suspension und Flüssigkeiten das Fixierelement passieren können.

Das Fixierelement kann ausserdem eine Vorrichtung zur Befestigung eines Injektionsrohres aufweisen. Dies kann beispielsweise eine weitere Ausnehmung oder eine Lasche sein. Mit Hilfe des Injektionsrohres kann eine Suspension, wie zum Beispiel eine Suspension aus Bentonit, Zement und Wasser, in das Bohrloch gegeben werden. Weitere geeignete Suspensionen und Lösungen, die dazu verwendet werden können sind dem Fachmann bekannt. Diese Suspensionen und Lösungen stabilisieren sowohl das Bohrloch als auch die Erdwärmesonde im Bohrloch. Der Einsatz von Bentonit ist bei grobkörnigen Sanden und Kiesen zur Stabilisierung des Bohrloches wichtig.

Für die Herstellung des erfindungsgemässen Fixierelementes sind Kunststoffe oder Metalle geeignet. Das erfindungsgemässe Fixierelement ist konstruktionstechnisch einfach herzustellen. Die Herstellung kann beispielsweise durch spanabhebende Bearbeitung oder durch ein Spritzgussverfahren erfolgen. Bei mechanischer Festigung des Fixierelements eignen sich Polyethylen und Polyvinylchlorid. Bei Herstellung mittels Spritzgussverfahren eignen sich Acrylnitril-Butadien-Styrol-Copolymere, Polypropylen, Polyoxymethylen, Polyamide und Polyvincylchlorid besonders gut.

Die Erfindung wird im folgenden anhand der Zeichnung näher erläutert.

Es zeigen
- Fig. 1a: ein ersten Ausführungsbeispiel eines Fixierelements in Draufsicht;
- Fig. 1b/c: das in Fig. 1a gezeigte Fixierelement in Seitenansicht;
- Fig. 2a: ein weiteres Ausführungsbeispiel eines Fixierelements mit Durchflusskanälen in Draufsicht;
- Fig. 2b/c: das in Fig. 2a gezeigte Fixierelement in Seitenansicht;
- Fig. 3: das in Fig. 1 gezeigte Fixierelement, das die Rohrabschnitte von zwei Rohrpaaren einer Erdwärmesonde fügt;
- Fig. 4: einen Schnitt nach Linie A-A nach Fig. 3;
- Fig. 5: das in Fig. 1 gezeigte Fixierelement, das die Rohrabschnitte von zwei Rohrpaaren einer Erdwärmesonde mit einem Gewicht fügt;
- Fig. 6a: ein weiteres Ausführungsbeispiel eines Fixierelements in Draufsicht;
- Fig. 6b/c: das in Fig. 6a gezeigte Fixierelement in Seitenansicht;
- Fig. 7: die in Fig. 3 gezeigte Erdwärmesonde mit einem Gewicht;

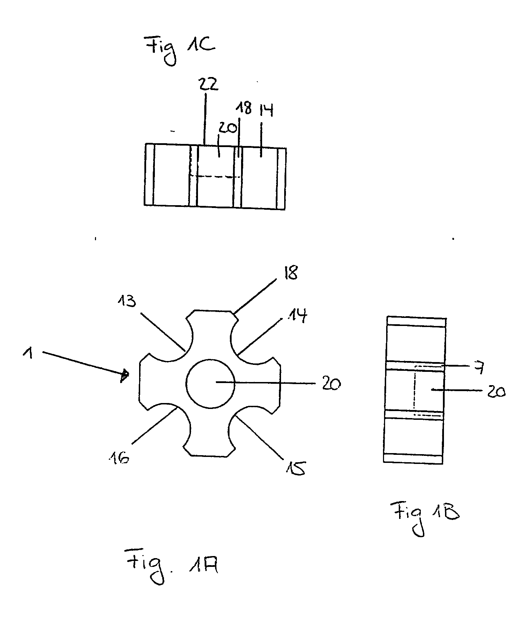

Fig. 1 zeigt ein Fixierelement 1, das aus thermoplastischem Kunststoff oder Metall hergestellt ist. Das Fixierelement 1 weist vier Ausnehmungen 13,14,15,16 auf, die dazu bestimmt sind, Rohrabschnitte von zwei Rohrpaaren einer Erdwärmesonde axial zu fügen. Die Ausnehmungen 13,14,15,16 können durch spanabhebende Bearbeitung hergestellt werden, aber es auch möglich das Fixierelement 1 mittels eines Spritzgussverfahrens herzustellen. Das Fixierelement 1 ist symmetrisch ausgebildet, wobei die Abstände zwischen benachbarten Ausnehmungen 13,14,15,16 jeweils gleich sind. Eine symmetrische Ausbildung ist jedoch nicht zwingend. Die Ausnehmungen 13,14,15,16 sind kreisförmig und erstrecken sich über ein Bogensegment von 180°. Es wäre jedoch auch möglich, die Ausnehmungen 13,14,15,16 so zu gestalten, dass sie sich über ein Bogensegment von bis zu 270° erstrecken. Die an die Ausnehmungen 13,14,15,16 angrenzenden Kanten 18 des Fixierelements 1 sind abgeschrägt, es wäre jedoch auch möglich diese abzurunden. In der Mitte des Fixierelements ist eine Stossfläche 20 angeordnet, die zur Aufnahme des Endabschnittes einer Einführstange bestimmt ist. Wie den Fig. 1B und 1C zu entnehmen ist, erstreckt sich die Ausnehmung für den Endabschnitt der Einführstange über die halbe Höhe des Fixierelements 1. Die Stossfläche für die Einführstange kann allerdings auch von der ebenen Oberfläche 22 des Fixierelements 1 gebildet sein. Die Stossfläche ist in der hier dargestellten Ausführungsform glatt, es sind jedoch auch raue, gerippte oder gefurchte Stossflächen denkbar.

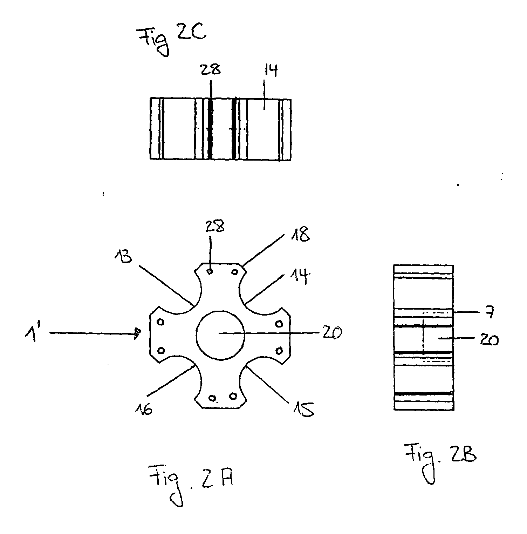

In Fig. 2 ist eine weitere Ausführungsform des in Fig. 1 gezeigten Fixierelements 1' gezeigt. Das Fixierelement 1' weist zusätzlich Durchflusskanäle 28 auf, die das Fixierelement 1' senkrecht von oben bis unten durchdringen. Durch sie kann nach dem Einbringen der Erdwärmesonde eine gut wärmeleitende Suspension, wie zum Beispiel eine Suspension aus Wasser und Bentonit, geleitet werden, die später erstarrt und der Erdwärmesonde mehr Halt gibt und das Bohrloch stabilisiert.

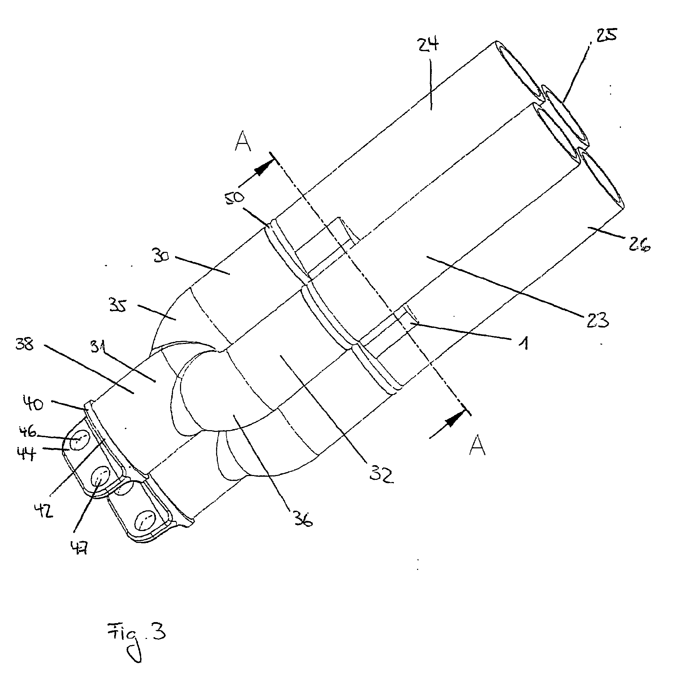

Fig. 3 zeigt das in Fig. 1 gezeigte Fixierelement 1 dessen vier Ausnehmungen 13,14,15,16 Rohrabschnitte 23,24,25,26 axial fügen. Jeweils zwei Rohrabschnitte 23,24 und 25,26 sind über je ein Verbindungsstück 38 miteinander verbunden. Das Verbindungsstück ist im wesentlichen Y-förmig ausgebildet und weist drei Rohrabschnitte 30,31,32 auf, von denen der eine Rohrabschnitt 31 den Y-Stammteil bildet. Die beiden anderen zum Verbindungsstück gehörenden Rohrabschnitte 30,32 sind über je einen bogenförmigen Rohrteil 35,36 mit dem den Y-Stammteil bildenden Rohrabschnitt 31 verbunden und bilden zusammen mit den letzeren die Schenkel des Y-förmigen Verbindungsstückes. Der Stopfen 40 schützt mit seinem Bodenteil 42 die Erdwärmesonde zusätzlich vor einer Beschädigung während des Einbringens in das Bohrloch. Die Lasche 44 des Stopfen 40 wirkt als ein das Einbringen der Erdwärmesonde in das Bohrloch erleichterndes Stosselement. Die Bohrungen 46,47 in der Lasche 44 ermöglichen das Anbringen eines Gewichts am tiefsten Punkt der Erdwärmesonde, das dem Auftrieb entgegenwirkt. Das Verbindungsstück 38 ist mit den Rohrabschnitten 23,24 bzw. 25,26 über die zu dem Verbindungsstück gehörenden Rohrabschnitte 30,32 verbunden. Die Verbindung wird vorzugsweise mittels Heizwendelschweissen oder Heizelementstumpfschweissen hergestellt. Die Schweissnaht an den Rohrabschnitten 23,24,25,26 dient als Anschlagsstelle 50. Die Anschlagsstellen 50 der vier Rohrabschnitte 23,24,25,26 verhindern, dass das Fixierelement 1 weiter in Richtung Verbindungsstück 38 gestossen werden kann. Durch das Aufliegen des Fixierelements 1 auf der Anschlagsstelle 50 ist ein seitliches Verdrehen der Rohre nicht mehr möglich, was zur Folge hat, dass das Fixierelement 1 die Rohrabschnitte 23,24,25,26, und damit beide Rohrpaare der Erdwärmesonde, äquidistant stabilisiert. Das erfindungsgemässe Fixierelement ermöglicht so ein einfaches Einführen der Erdwärmesonde in Bohrlöcher, die auch eine Tiefe von über 50 Metern aufweisen können, ohne dass die Erdwärmesonde in Schlangenlinienform an den Wänden des Bohrlochs anschlägt. Durch das erfindungsgemässen Fixierelement 1 wird die Erdwärmesonde sicher und ohne Beschädigungen in das Bohrloch eingeführt. Dies hat ausserdem den Vorteil, dass der Widerstand infolge Reibung reduziert wird.

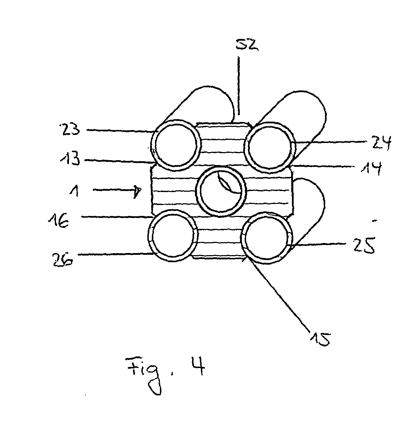

Fig. 4 zeigt den in Fig. 1 gezeigten Fixierelement 1 mit den Ausnehmungen 13,14,15,16, die die Rohrabschnitte 23,24,25,26 axial fügen. In der gezeigten Ausführungsform ist die jeweils zwischen zwei benachbarten Aussparungen liegende Seitenwand 52 des Fixierelements 1 nach innen versetzt, d.h. sie liegt tiefer als die am weitesten nach aussen stehende Mantellinie der Rohrabschnitte. Dadurch kommt das Fixierelement 1 beim Einführen in das Bohrloch zwangsläufig nicht mit der Wand des Bohrloch in Kontakt. Zwischen der Seitewand 52 des Fixierelements 1 und der Wand des Bohrlochs ist ausreichend Platz, sodass eine Bentonitsuspension (Bentonit-Zement-Quarzsand) oder andere dem Fachmann bekannte Suspensionen)dazwischen nach unten fliessen kann.

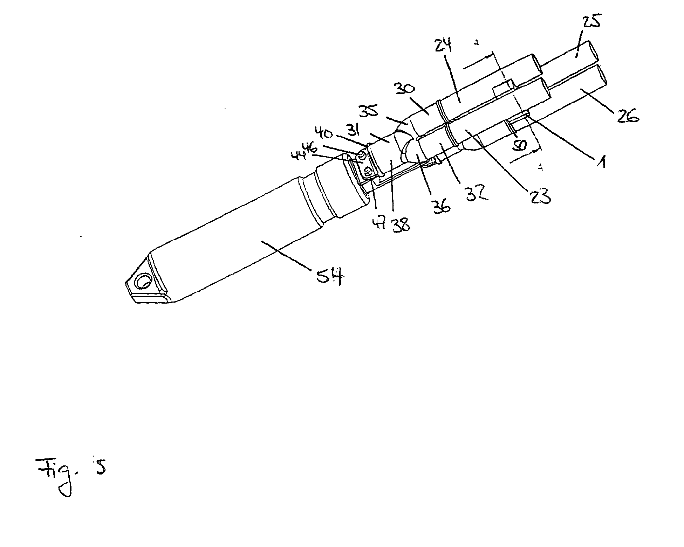

In Fig. 5 ist das in Fig. 1 beschriebene Fixierelement 1 mit den Ausnehmungen 13,14,15,16 gezeigt, der die Rohrabschnitte 23,24,25,26 von zwei Rohrpaaren einer Erdwärmesonde axial fügt. Wie daraus ersichtlich ist, sind die Rohrpaare versetzt zueinander angeordnet. Die Schweissverbindung bildet die Anschlagstelle 50 für das Fixierelement 1. Das Fixierelement 1 liegt ausschliesslich auf den Anschlagstellen 50 von zwei Rohrabschnitten auf, d.h. von einem Rohrpaar der Erdwärmesonde. Durch das enge Aneinanderliegen der beiden Rohrpaare ist dennoch gewährleistet, dass durch das zusammenwirken der Anschlagstelle 50 und Grundfläche des Fixierelements 1 auf einer Seite, die Rohrabschnitte 23,24,25,26 äquidistant stabilisiert sind und das Fixierelement 1 nicht verrutschen kann. In den Bohrungen 46,47 in der Lasche 44 ist ein Gewicht 54 angebracht, das dem Auftrieb entgegenwirkt und das Einführen der Erdwärmesonde stark erleichtert. Die Gewichte sind vorzugsweise 10 bis 40 kg schwer, besonders bevorzugt werden Gewichte, die 12.5 bis 25 kg schwer sind.

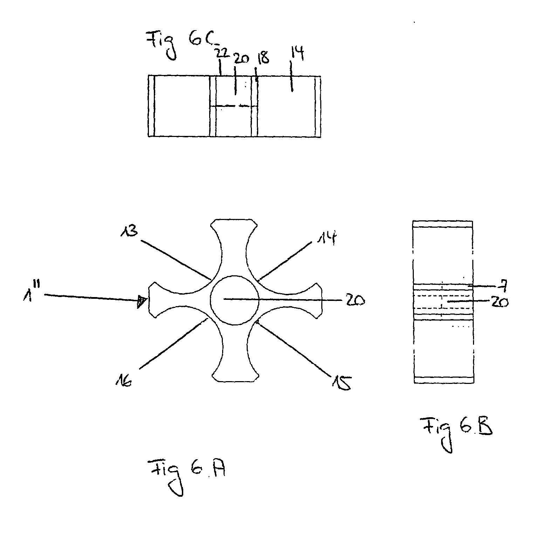

Fig. 6A zeigt eine weitere Ausführungsform eines Fixierelements 1^{II}, bei dem die Ausnehmungen 13,14,15,16 für Rohrabschnitte 23,24,25,26 mit einem Durchmesser von 40 cm ausgestaltet sind. Die Abstände zu jeweils benachbarten Ausnehmungen sind unterschiedlich, es wäre jedoch auch eine gleiche Anordnung möglich. Es sind aber auch Fixierelemente mit anderen Durchmessern denkbar.

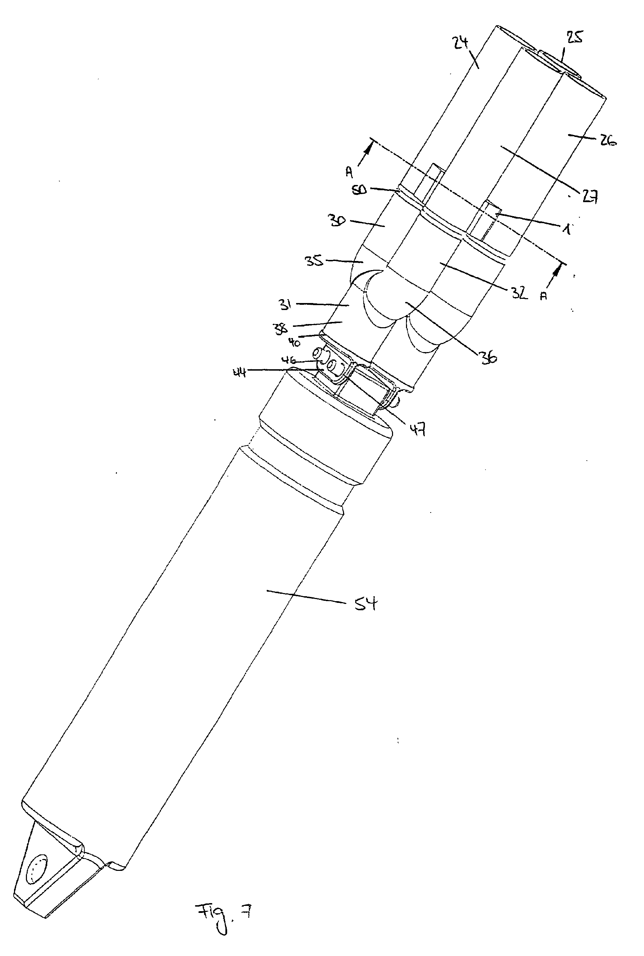

Fig. 7 zeigt die in Fig. 3 dargestellte Ausführungsform, bei der in den Bohrungen 46,47 in der Lasche 44 der Erdwärmesonde ein Gewicht 54 angebracht ist, das dem Auftrieb entgegenwirkt und das Einführen der Erdwärmesonde stark erleichtert. Selbstverständlich könnte der Stopfen statt zwei auch nur eine Bohrung zur Befestigung des Gewichtes aufweisen, oder mit anderen Mitteln zum Anbringen des Gewichtes ausgestattet oder anders beschwert sein.

## Patentansprüche

1. Fixierelement (1) für Rohrabschnitte (23,24) eines Rohrpaares einer Erdwärmesonde, die über ein Verbindungsstück (38) mit einem bogenförmigen Rohrteil miteinander verbundene Rohre aufweist, **dadurch gekennzeichnet, dass** das Fixierelement (1) zwei Ausnehmungen (13,14) besitzt, deren Radien den Aussenradien der Rohrabschnitte (23, 24) entsprechen und die Ausnehmungen (13,14) Rohrabschnitte (23,24) in axialer Richtung zu fügen bestimmt sind, wobei das Fixierelement (1) als Stossauflage (20) eine Stossfläche für eine Einführstange für die Erdwärmesonde aufweist.

2. Fixierelement (1) gemäss Anspruch 1, **dadurch gekennzeichnet, dass** das Fixierelement (1) dazu bestimmt ist, mit einer Anschlagsstelle (50) der beiden Rohrabschnitte (23,24) zusammenzuwirken.

3. Fixierelement (1) gemäss einem der vorangehenden Ansprüche, **dadurch gekennzeichnet, dass** das Fixierelement zwei weitere Ausnehmungen (15,16) aufweist, die dazu bestimmt sind, zwei Rohrabschnitte (25,26) eines weiteren Rohrpaares, das über ein bogenförmiges Rohrteil miteinander verbundene Rohre aufweist, in axialer Richtung zu fügen.

4. Fixierelement (1) gemäss einem der vorangehenden Ansprüche, **dadurch gekennzeichnet, dass** die Ausnehmung (13,14,15,16) sich über ein Bogensegment mit einem Öffnungswinkel von 180 bis 270° erstreckt.

5. Fixierelement (1) gemäss einem der vorangehenden Ansprüche, **dadurch gekennzeichnet, dass** die Stossfläche (20) für die Einführstange in einer Ausnehmung angeordnet ist, die zur Aufnahme des Endabschnittes der Einführstange bestimmt ist.

6. Fixierelement (1) gemäss einem der vorangehenden Ansprüche, **dadurch gekennzeichnet, dass** das Fixierelement (1) Durchflusskanäle (28) aufweist.

7. Fixierelement (1) gemäss einem der vorangehenden Ansprüche, **dadurch gekennzeichnet, dass** das Fixierelement (1) eine Vorrichtung zur Befestigung eines Injektionsrohres aufweist.

8. Fixierelement (1) gemäss einem der vorangehenden Ansprüche mit einem Rohrpaar einer Erdwärmesonde, in dem Rohrabschnitte (23,24) durch die Ausnehmungen (13,14) in axialer Richtung gefügt sind.

9. Fixierelement (1) gemäss einem der Ansprüche 3 bis 8 mit zwei Rohrpaaren einer Erdwärmesonde, in dem Rohrabschnitte (23,24,25,26) von zwei Rohrpaaren einer Erdwärmesonde durch die Ausnehmungen (13,14,15,16) in axialer Richtung gefügt sind, **dadurch gekennzeichnet, dass** die Anschlagsstellen (50) sämtlicher Rohrabschnitte (23,24,25,26) mit dem Fixierelement (1) zusammenwirken.

10. Fixierelement (1) gemäss einem der Ansprüche 3 bis 8 mit zwei Rohrpaaren einer Erdwärmesonde, in dem Rohrabschnitte (23,24,25,26) von zwei Rohrpaare durch die Ausnehmungen (13,14,15,16) in axialer Richtung gefügt sind, **dadurch gekennzeichnet, dass** die Anschlagsstellen (50) von nur zwei Rohrabschnitten (23,24), die über ein bogenförmiges Rohrteil miteinander verbunden sind, mit dem Fixierelement (1) zusammenwirken.

11. Fixierelement (1) mit Ausnehmungen (13,14,15,16) gemäss einem der vorangehenden Ansprüche, die Rohrabschnitte (23,24,25,26) von Rohrpaaren einer Erdwärmesonde in axialer Richtung fügen, wobei das Rohrpaar über ein Verbindungsstück (38) mit einem bogenförmigen Rohrteil miteinander verbundene Rohre aufweist und das Verbindungsstück (38) im wesentlichen eine Y-Form aufweist, **dadurch gekennzeichnet, dass** das Verbindungsstück (38) drei parallelen verlaufende Rohrabschnitte (30,31,32) aufweist, von denen der eine Rohrabschnitt (31) den Y-Stammteil bildet, mit dem die beiden anderen (30,32), über einen bogenförmigen Rohrteil (35,36) miteinander verbunden sind.
